# EUROPÄISCHE PATENTANMELDUNG

(11) **EP 0 999 102 A2**
(43) Veröffentlichungstag der Anmeldung: **10.05.2000**
(21) Anmeldenummer: 99119886.2
(22) Anmeldetag: 07.10.1999
(51) Int. Cl.: B60R 25/00

(54) **Zugangsberechtigungssystem für ein Kraftfahrzeug**

(30) Priorität: 06.11.1998 DE 19851177
(71) Anmelder: ROBERT BOSCH GMBH, 70442 Stuttgart (DE)
(72) Erfinder: Schroff, Clemens, 76698 Ubstadt-Weiher (DE); Schmitz, Stephan, 50672 Köln (DE)

(57) **Zusammenfassung**

Die Erfindung betrifft ein Zugangsberechtigungssystem für ein Kraftfahrzeug (10) mit einem im Kraftfahrzeug untergebrachten Steuergerät (12) und einem tragbaren Transponder (21), die in einem drahtlosen Kommunikations-Frage-Antwort-Dialog die Berechtigung zur Freigabe des Zugangs einleiten und überprüfen. Ein automatischer Zugang für den mit dem auf das Kraftfahrzeug abgestimmten Transponder versehenen Fahrer wird dadurch ermöglicht, daß in einem Leuchtengehäuse des Kraftfahrzeuges ein Annäherungssensor (14) untergebracht ist, der bei Anwesenheit einer Person in einem vorgegebenen Überwachungsbereich anspricht und den Kommunikations-Frage-Antwort-Dialog einleitet, und daß nur bei Anwesenheit des dem Kraftfahrzeug zugeordneten Transponders im Überwachungsbereich der Kommunikations-Frage-Antwort-Dialog erfolgreich durchführbar und der Zugang zum Kraftfahrzeug freigebbar ist.

## Beschreibung

### Stand der Technik

Die Erfindung betrifft ein Zugangsberechtigungssystem für ein Kraftfahrzeug mit einem im Kraftfahrzeug untergebrachten Steuergerät und einem tragbaren Transponder, die in einem drahtlosen Kommunikations-Frage-Antwort-Dialog die Berechtigung zur Freigabe des Zugangs einleiten und überprüfen.

Derartige Zugangsberechtigungssysteme sind in den verschiedensten Ausführungen bekannt, die in den meisten Fällen durch Auslösen einer manuellen Schaltmaßnahme am Kraftfahrzeug, wie Betätigen eines Schalters, des Türgriffes und dgl., einleitbar und vorzugsweise als Diebstahl-Schutzsysteme verwendet sind, da nur der Besitzer des auf das Steuergerät im Kraftfahrzeug und den vorgegebenen Kommunikations-Frage-Antwort-Dialog abgestimmten Transponder Zugang zum Kraftfahrzeug erhalten kann. Dabei unterscheiden sich die bekannten Systeme in der Übertragung der Frage- und Antwortsignale und der Ausgestaltung des Transponders. Dies ist für die vorliegende Erfindung nicht von Bedeutung, so daß diese bei allen bekannten Zugangsberechtigungssystemen eingesetzt werden kann.

Es ist Aufgabe der Erfindung, bei einem Zugangsberechtigungssystem der eingangs erwähnten Art den Kommunikations-Frage-Antwort-Dialog automatisch einzuleiten und durchzuführen, wenn der Kraftfahrzeugführer sich mit dem richtig abgestimmten Transponder in einen vorgegebenen Außenbereich des Kraftfahrzeugs begibt.

Diese Aufgabe wird nach der Erfindung dadurch gelöst, daß in einem Leuchtengehäuse des Kraftfahrzeuges ein Annäherungssensor untergebracht ist, der bei Anwesenheit einer Person in einem vorgegebenen Überwachungsbereich anspricht und den Kommunikations-Frage-Antwort-Dialog einleitet, und daß nur bei Anwesenheit des dem Kraftfahrzeug zugeordneten Transponders im Überwachungsbereich der Kommunikations-Frage-Antwort-Dialog erfolgreich durchführbar und der Zugang zum Kraftfahrzeug freigebbar ist.

Bei dieser Auslegung des Zugangsberechtigungssystems wird der Kommuniketions-Frage-Antwort-Dialog stets automatisch eingeleitet, wenn sich eine Person in den Überwachungsbereich begibt. Die Ausführung des Kommunikations-Frage-Antwort-Dialog für die Überprüfung der Zugangsberechtigung kann jedoch nur durchgeführt werden, wenn diese Person den dem Kraftfahrzeug zugeordneten und auf die vom Steuergerät vorgegebene Kennung abgestimmt ist. Sind diese Voraussetzungen erfüllt, erhält die sich als berechtigt ausgewiesene Person auch automatisch Zugang zum Kraftfahrzeug, ohne den Diebstahl-Schutz zu beeinträchtigen. Der Einbau des Annäherungssensors in ein Leuchtengehäuse hat dabei den Vorteil, daß das Design des Kraftfahrzeuges nicht beeinträchtigt wird und der Annäherungssensor gegen Witterungseinflüsse geschützt ist.

Der Überwachungsbereich ist dabei so gewählt, daß der Annäherungssensor mit konstruktiven Maßnahmen zur Festlegung des außerhalb des Kraftfahrzeuges liegenden Überwachungsbereiches versehen ist oder daß die optischen Mittel der Leuchte, wie Reflektor, Streuscheibe oder Bereiche derselben, zur Festlegung des außerhalb des Kraftfahrzeuges liegenden Überwachungsbereiches verwendet sind.

Nach einer bevorzugten Ausgestaltung ist vorgesehen, daß der Annäherungssensor in eine auf der Kraftfahrzeug-Rückseite angeordnete Leuchte, wie Rücklicht-Leuchte, Bremslicht-Leuchte, 3. Bremslicht-Leuchte oder Rückfahrscheinwerfer, eingebaut ist. Dabei wird von dem Tatbestand ausgegangen, daß bei geparkten Kraftfahrzeugen in der Regel die Annäherung von der freien Rückseite des Kraftfahrzeuges aus erfolgt. Für die Wahl des Annäherungssensors ist vorgesehen, daß ein optisch, wärmeempfindlich oder elektromagnetisch arbeitender Annäherungssensor eingesetzt ist.

Um die Batterie des Kraftfahrzeuges in der abgestellten Position des Kraftfahrzeuges zu schonen, ist weiterhin vorgesehen, daß der Annäherungssensor wiederholt nur in kurzen Zeitabschnitten aktivierbar ist, sowie daß der Kommunikations-Frage-Antwort-Dialog nur bei wiederholtem Ansprechen des Annäherungssensor einleitbar und durchführbar ist, wobei im letzteren Fall auch noch die Sicherheit des Systems erhöht wird.

Damit beim Verlassen des Kraftfahrzeuges ein sicheres Absperren erreicht wird, kann vorgesehen sein, daß die Sperrung des Zugangs mittels einer getrennten Schaltmaßnahme am Transponder einleitbar ist, sowie daß nach einer Sperrung des Zugangs eine automatische Einleitung des Frage-Antwort-Dialogs durch eine vorgegebene Schutzzeit verhindert ist. Die vorgegebene Schutzzeit verhindert ein unbeabsichtigtes Wiederöffnen der Türschlösser, wenn der Kraftfahrzeugführer mit dem Transponder den Überwachungsbereich passiert.

Der Überwachungsbereich läßt sich dadurch auf einfache Weise vergrößern, daß zur Vergrößerung des Überwachungsbereiches in der linken und der rechten Rücklicht-Leuchte oder Bremslicht-Leuchte je ein Annäherungssensor untergebracht ist. Auch ist es möglich, durch Sensoren in den seitlichen Blinkleuchten den Überwachungsbereich auf die Fahrer- und/oder Beifahrerseite zu erweitern oder zu verlegen.

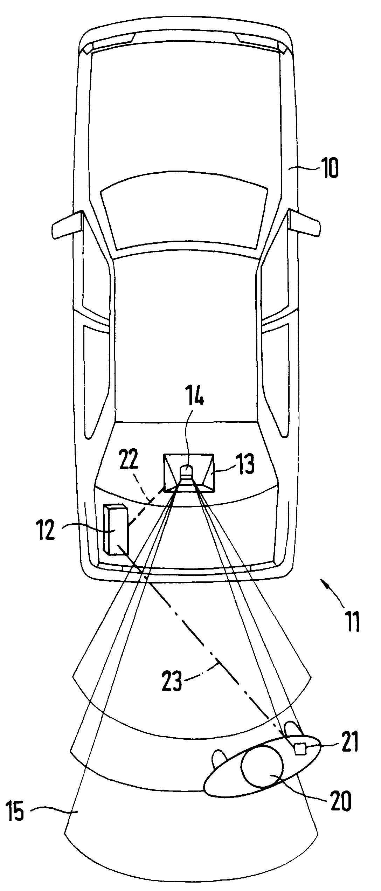

Die Erfindung wird anhand eines in der Zeichnung dargestellten Ausführungsbeispiels näher erläutert.

Die Zeichnung zeigt ein Kraftfahrzeug 10 in Draufsicht. Im Kraftfahrzeug 10 ist ein Steuergerät 12 untergebracht, das zur Feststellung der Zugangsberechtigung mit einem außerhalb des Kraftfahrzeuges 10 angeordneten und mit den abgestimmten Kennungen ausgerüsteten Transponder 21 kommunizieren kann. Der Transponder 21 ist tragbar und wird von der zum Fahren des Kraftfahrzeuges 10 berechtigten Person 20 mitgeführt. Steuergerät 12 und Transponder 21 können in unterschiedlicher Weise aufgebaut sein, wie der zahlreiche Stand der Technik belegt. Auch für den Kommunikations-Frage-Antwort-Dialog 23 zwischen Steuergerät 12 und Transponder 21 gibt es viele bekannte Alternativen. Dies ist für die vorliegende Erfindung unwesentlich, so daß hier auf beliebige bekannte Ausgestaltungen zurückgegriffen werden kann.

Im Ausführungsbeispiel ist im Bereich der Kraftfahrzeug-Rückseite 11 eine 3. Bremsleuchte 13 angeordnet. In diese Leuchte ist ein Annäherungssensor 14 ein-gebaut, der mit einer eigenen Optik oder unter Verwendung der optischen Mittel, wie Streuscheibe, Reflektor und dgl. der Kraftfahrzeug-Leuchte, einen Überwachungsbereich 15 auf der Kraftfahrzeug-Rückseite 11 auf die Annäherung einer Person 20 überwacht. Der Annäherungssensor 14 kann dabei auch in einer Bremslicht-Leuchte, einer Rücklicht-Leuchte oder eines Rückfahrscheinwerfers eingebaut sein und ebenfalls einen vorgegebenen Überwachungsbereich 15 erfassen. Zur Vergrößerung des Überwachungsbereiches können auch die linke und die rechte Bremslicht-Leuchten oder Rücklicht-Leuchten mit Annäherungssensoren 14 ausgerüstet sein.

Gelangt eine Person 20 in den Überwachungsbereich 15, dann spricht der Annäherungssensor 14 an und leitet über das Steuergerät 12 den KommunikationsFrage-Antwort-Dialog 23 ein, wie die Verbindung 22 zwischen Annäherungssensor 14 und Steuergerät 12 zeigt. Nur dann, wenn die Person 20 den auf das Kraftfahrzeug 10 abgestimmten Transponder 21 mit sich führt, kann der Kommunikations-Frage-Antwort-Dialog 23 erfolgreich ablaufen und der Zugang zum Kraftfahrzeug 10 freigegeben werden, wobei das Steuergerät 12 und die Türschlösser des Kraftfahrzeuges 10 in bekannter Weise zusammenarbeiten.

Hat die Person 20 keinen oder einen falschen Transponder 21, dann wird der Kommunikations-Frage-Antwort-Dialog 23 wohl eingeleitet, er kann jedoch nicht erfolgreich durchgeführt werden, da die Kennungen von Steuergerät 12 und Transponder 21 nicht koinzidieren, d.h. aufeinander abgestimmt sind.

Die Unterbringung des Annäherungssensors 14 oder der Annäherungssensoren 14 in auf der Kraftfahrzeug-Rückseite 11 angeordneten oder ausgerichteten Leuchten 13 hat den Vorteil, daß bei in Reihen nebeneinander angeordneter Kraftfahrzeuge 10 der Überwachungsbereich 15 freibleibt und von dem Fahrer passiert wird, wenn er sich Zugang zum Kraftfahrzeug 10 verschaffen will. Der Zugang wird ihm dann ohne weitere Maßnahmen automatisch gestattet.

Selbstverständlich können auch weitere Annäherungssensoren 14 im Kraftfahrzeug eingebaut sein, die anders gerichtete Überwachungsbereiche 15 erfassen, ohne den Rahmen der Erfindung zu verlassen.

Als Annäherungssensoren 14 werden optisch, wärmeempfindlich oder elektromagnetisch arbeitende Sensoren eingesetzt. Zur Reduzierung der Energie kann dabei noch vorgesehen sein, daß sie nur wiederholt in kurzen Zeitabschnitten aktiviert werden.

Aus Sicherheitsgründen kann die Einleitung 22 des Kommunikations-Frage-Antwort-Dialogs 23 auch nur nach wiederholtem Ansprechen des Annäherungssensors 14 vorgenommen werden.

Beim Abstellen des Kraftfahrzeuges kann die Sperrung des Zugangs, d.h. die Verriegelung der Türschlösser, mittels einer getrennten, am Transponder 21 auslösbaren Schaltmaßnahme eingeleitet werden. Nach der Sperrung des Zugangs bleibt die automatische Einleitung des Frage-Antwort-Dialogs durch eine vorgegebene Schutzzeit verhindert, damit beim Passieren des Überwachungsbereiches 15 der Zugang nicht ungewollt wieder freigegeben wird. Will der Fahrer noch einmal Zugang zum Kraftfahrzeug 10 haben, dann muß er den Frage-Antwort-Dialog durch eine manuelle Schaltmaßnahme (z.B. Betätigung des Türgriffes) einleiten, oder die Schutzzeit abwarten.

Zur Erweiterung und/oder Verlagerung des Überwachungsbereiches sind auch Annäherungssensoren in den vorderen Scheinwerfergehäusen und/oder den seitlichen Blinkleuchten untergebracht. Es ist auch denkbar, daß Annäherungssensoren in den Lampengehäusen der Innenbeleuchtung untergebracht sind, um das Kraftfahrzeug zentral auf Annäherung einer Person zu überwachen.

## Patentansprüche

1. Zugangsberechtigungssystem für ein Kraftfahrzeug mit einem im Kraftfahrzeug untergebrachten Steuergerät und einem tragbaren Transponder, die in einem drahtlosen Kommunikations-Frage-Antwort-Dialog die Berechtigung zur Freigabe des Zugangs einleiten und überprüfen,
dadurch gekennzeichnet,
daß in einem Leuchtengehäuse (13) des Kraftfahrzeuges (10) ein Annäherungssensor (14) untergebracht ist, der bei Anwesenheit einer Person (20) in einem vorgegebenen Überwachungsbereich (15) anspricht und den Kommunikations-Frage-Antwort-Dialog einleitet (22, 23), und
daß nur bei Anwesenheit des dem Kraftfahrzeug (10) zugeordneten Transponders (21) im Überwachungsbereich der KommunikationsFrage-Antwort-Dialog (23) erfolgreich durchführbar und der Zugang zum Kraftfahrzeug (10) freigebbar ist.

2. Zugangsberechtigungssystem nach Anspruch 1,
dadurch gekennzeichnet,
daß der Annäherungssensor (14) mit optischen Mitteln zur Festlegung des außerhalb des Kraftfahrzeuges (10) liegenden Überwachungsbereiches (15) versehen ist.

3. Zugangsberechtigungssystem nach Anspruch 1 oder 2,
dadurch gekennzeichnet,
daß die optischen Mittel der Leuchte (13), wie Reflektor, Streuscheibe oder Bereiche derselben, zur Festlegung des außerhalb des Kraftfahrzeuges (10) liegenden Überwachungsbereiches (15) verwendet sind.

4. Zugangsberechtigungssystem nach einem der Ansprüche 1 bis 3,
dadurch gekennzeichnet,
daß der Annäherungssensor (14) in eine auf der Kraftfahrzeug-Rückseite (11) angeordnete Leuchte (13), wie Rücklicht-Leuchte, Bremslicht-Leuchte, 3. Bremslicht-Leuchte (13) oder Rückfahrscheinwerfer, eingebaut ist.

5. Zugangsberechtigungssystem nach einem der Ansprüche 1 bis 4,
dadurch gekennzeichnet,
daß ein Annäherungssensor (14) mit hoher Aufnahme-Empfindlichkeit verwendet ist.

6. Zugangsberechtigungssystem nach einem der Ansprüche 1 bis 5,
dadurch gekennzeichnet,
daß ein optisch, wärmeempfindlich oder elektromagnetisch arbeitender Annäherungssensor (14) eingesetzt ist.

7. Zugangsberechtigungssystem nach einem der Ansprüche 1 bis 6,
dadurch gekennzeichnet,
daß der Annäherungssensor (14) wiederholt nur in kurzen Zeitabschnitten aktivierbar ist.

8. Zugangsberechtigungssystem nach einem der Ansprüche 1 bis 7,
dadurch gekennzeichnet,
daß der Kommunikations-Frage-Antwort-Dialog (23) nur bei wiederholtem Ansprechen des Annäherungssensor (14) einleitbar und durchführbar ist.

9. Zugangsberechtigungssystem nach einem der Ansprüche 1 bis 8,
dadurch gekennzeichnet,
daß die Sperrung des Zugangs mittels einer getrennten Schaltmaßnahme am Transponder (21) einleitbar ist.

10. Zugangsberechtigungssystem nach Anspruch 9,
dadurch gekennzeichnet,
daß nach einer Sperrung des Zugangs die automatische Einleitung des Frage-Antwort-Dialogs durch eine vorgegebene Schutzzeit verhindert ist.

11. Zugangsberechtigungssystem nach Anspruch 4,
dadurch gekennzeichnet,
daß zur Vergrößerung des Überwachungsbereiches (15) in der linken und der rechten Rücklicht-Leuchte oder Bremslicht-Leuchte je ein Annäherungssensor (14) untergebracht ist.

12. Zugangsberechtigungssystem nach einem der Ansprüche 1 bis 11,
dadurch gekennzeichnet,
daß zur Vergrößerung und/oder Verlagerung des Überwachungsbereiches (15) Annäherungssensoren (14) in den Scheinwerfergehäusen, den seitlichen Blinkleuchten und/oder den Leuchten der Innenbeleuchtung untergebracht sind.
